# EUROPEAN PATENT SPECIFICATION

(11) **EP 2 813 766 B1**
(45) Date of publication and mention of the grant of the patent: **11.04.2018**
(21) Application number: 13171218.4
(22) Date of filing: 10.06.2013
(51) Int. Cl.: F24D 3/14

(54) **A heat exchanger panel system**
Wärmetauschertafelsystem
Système de panneau d'échangeur de chaleur

(43) Date of publication of application: 17.12.2014
(73) Proprietor: NOVOPAN TRAEINDUSTRI A/S, 8550 Ryomgaard (DK)
(72) Inventor: Simonsen, Peter Bendix, 8400 Ebeltoft (DK)
(74) Representative: Chas. Hude A/S

(56) References cited:
- WO-A1-02/37032

## Description

### Technical Field

The invention relates to a heat exchanger panel system comprising a subfloor plate and a heat spreader sheet, said subfloor plate comprising at least one longitudinal groove, said groove comprising a bottom part and two oppositely placed wall parts, said wall parts and bottom part forming a part-circular recess in said subfloor plate and the heat spreader sheet comprising a plate part having an upper surface and a lower surface, said plate part comprising a longitudinal profile extending from the lower surface to the longitudinal profile comprising an outer profile surface and an oppositely placed inner profile surface, said outer profile surface being substantially congruent with at least the bottom part of the part-circular recess, said inner profile surface forming a recess provided with a substantially tubular inner wall and having an aperture for receiving a tube.

### Background

WO 2011/239964 discloses a heat exchanger system according to the preamble of claim 1 comprising a panel and a heat spreader formed in a sheet of compressed particles of exfoliated graphite. The panel includes a groove shaped for receiving a thermal element. The heat spreader also comprises a groove shaped for mating with the panel groove. A liner is positioned between the panel and the heat spreader, said liner comprising an extended tab protruding from the liner toward the heat spreader. The extended tab retains the thermal element in the groove of the panel.
The system requires that tab clearance voids are provided in the heat spreader in order to let the tab retain the thermal element which is usually a tube. The system does not provide an easy attachment of a heat exchanger to the subfloor.

Further, a heat exchanger system comprising a subfloor and a heat spreader plate is known. The subfloor is provided with recesses parallel with each other, said recesses being provided for receiving the heat spreader. The heat spreaders are formed in a metal sheet and comprise longitudinal extending tube-retaining recesses that fit into the recesses of the subfloor. Heat exchanger tubes are pressed into the tube-retaining recesses and the plates are nailed to the surface of the subfloor by nails or screws.

This is a time-consuming and expensive process and does not provide any easy attachment of the heat spreader plate/the heat exchanger to the subfloor.

WO 02/37032 describes a modular panel consisting of thermal insulation material for laying in underfloor or wall heating systems. The panel comprises a flat rectangular base body and cavities for accommodating thermal conduits. Also this solution is a quite complex and time-consuming solution.

### Disclosure of the Invention

An aspect of the invention is to provide a new heat exchanger system overcoming at least one of the disadvantages of the prior art or at least providing a useful alternative.

According to a first aspect of the invention, a heat exchanger system as described in the introduction is provided and the outer profile surface of the profile comprises external projections placed at opposite sides of the longitudinal profile.

By the system, it is obtained that the tubes are easily clicked into the recesses of the panels and that the panels are easy attached to the subfloor by the unique click-system between the heat spreader and the subfloor. This is obtained by the projections provided at the outside of the profile of the heat spreader sheet, drilling into the walls of the recesses of the subfloor. Further, the heat exchange between the tubes and the heat spreader sheets are optimised as the recesses of the sheets are formed in such a way that tubes fit into the recess by press-fitting.

Due to the snap system between the subfloor and the sheet, there is no need for making a separate fastening of the sheets to the subfloor as they are tightly and unambiguously fastened to the subfloor by the snap/click-connection between the two parts and provided by the projections. The profile of the heat spreader sheets fits into the recess of the subfloor plates.

By heat spreader is to understand that the heat spreader plate is able to conduct the temperature of the tubes placed in the recess of the heat spreader plate to the surface of the heat spreader. Thereby, it regulates the temperature of the floor and the temperature of the room in which it is placed.

The grooves provided in the heat spreader plate hold pipes/tubes which carry warm or cool fluid for heating or cooling. These thermal conducting plates are laid over the subfloor and spread the heat/cooling effect.

As an example, each of the external projections placed at the outer profile surface of the profile is formed as a bulk and the height of the projections being h1.

The distance h1 is measured between the outer surface of the profile, from where the bulk extends, and tangent to the uppermost point of the bulk. Substantially, the bulk is shaped as a hemisphere and provided by a punching tool pressing the bulk out from the inside of the profile of the plate material. By this arrangement, a small compression is left at the inside surface of the profile.

The distance h1 is 0.25 - 2.5 mm, preferably 0.5 - 1.5 mm. However, the value of h1 depends on the compressions properties of the subfloor. The more compressible the floor is, the larger value of h1 is required in order to obtain the right and sufficient adherence between the heat spreader sheet and the subfloor. The diameter of basis of the bulk is around 3-5 mm.

According to another aspect of the invention, the height of a projection and the upper surface of the heat spreader sheet provide an angle V of 2-45 degrees.

By having the height of the external projections angled in relation to the horizontal level, the friction and thereby the adherence between the subfloor and the heat spreader sheet is regulated and improved. The surface of the external projection turning towards the subfloor has a larger contact surface with the subfloor than the surface of the projections turning the opposite way.

According to another aspect of the invention, the external projections are placed at a certain distance from the lower surface of the heat spreader sheet, said distance being equal to or larger than the radius of the substantially tubular inner wall, said distance measured between the uppermost point of the external projection and perpendicular to the lower surface.

By placing the projections (also referred to as protrusions) in the lower half of the outer surface of the recess, it has been shown that it is easier to provide the protrusion and further that the grip between the heat exchanger plate and the subfloor is improved.

As an example, the internal diameter of the recess of the heat spreader sheet is D1 and the diameter of the tube placed in said recess is [D1;D1*1,01].

By having such a dimension relation between the tube and the recess of the heat spreader sheet, a tight connection between the two components is ensured. If there is a slip between the two components and the tubes fit loosely into the recesses, the heat exchange effect is degraded and further there will be a certain noise from the joint as a result of the components extending or shortening due to heat changes.

According to another aspect of the invention, the internal diameter of the recess of the heat spreader sheet is D1, and the distance between the sides delimiting the aperture is less than the diameter D1 of the recess of the heat spreader sheet.

Thereby, it is ensured that when the tube is placed in the recess, it is kept in place due to the dimensions of the tube compared to the aperture.

As an example, the internal diameter of the recess of the heat spreader sheet is D1 and the distance between the sides delimiting the aperture is [D1*0,7;D1*0,99].

Thereby, it is ensured that when the tube is placed in the recess, it is kept in place. The tubes are made in a flexible, elastical and deformable material.

According to another aspect of the invention, the longitudinal sides delimiting the aperture of the recess comprise nose-shaped protrusions.

Thereby, it is ensured that the tubes are kept in place and that the tubes are not damaged due to the smooth and rounded form of the protruding noses.

According to another aspect of the invention, the heat spreader sheet is formed from a metal plate.

A suitable metal is aluminium or copper which are both good heat and cold-conducting metals. Therefore, they are excellent materials for forming the heat transferring plates. When aluminium sheets are used, the thickness of the plates is around 0.3 - 0.6 mm.

As an example, the subfloor plates are formed in a stable form material having a certain compression property, said compression property being adapted to ensure that at least a part of the external projections are embedded in said material when the heat spreader sheets are placed with the outer profile surface in the recesses/grooves of the subfloor.

The subfloor or at least the recess of the subfloor has to have certain flexibility, where the profile of the heat spreader sheet is placed, in order to receive the projections of the profile, and the projections are fastened to the recess by drilling into the walls of the recess.

The plates may be wood-based plates such as chip board, veneer plates, wood plates, but the subfloor may also be formed in a hard PUR foam or EPS.

### Brief Description of the Drawing(s)

The invention is explained in detail below with reference to the drawing(s), in which
Fig. 1 shows a heat exchanger panel system according to the invention,
Fig. 2 shows a subfloor plate for the heat exchanger system according to the invention,
Fig. 3 shows a heat spreader sheet for the heat exchange system according to the invention,
Fig. 4 shows the heat spreader sheet in Fig. 3 seen from underneath, ie the side facing the upper surface of the subfloor, and
Fig. 5 shows a sectional view along the line V-V in Fig. 4.

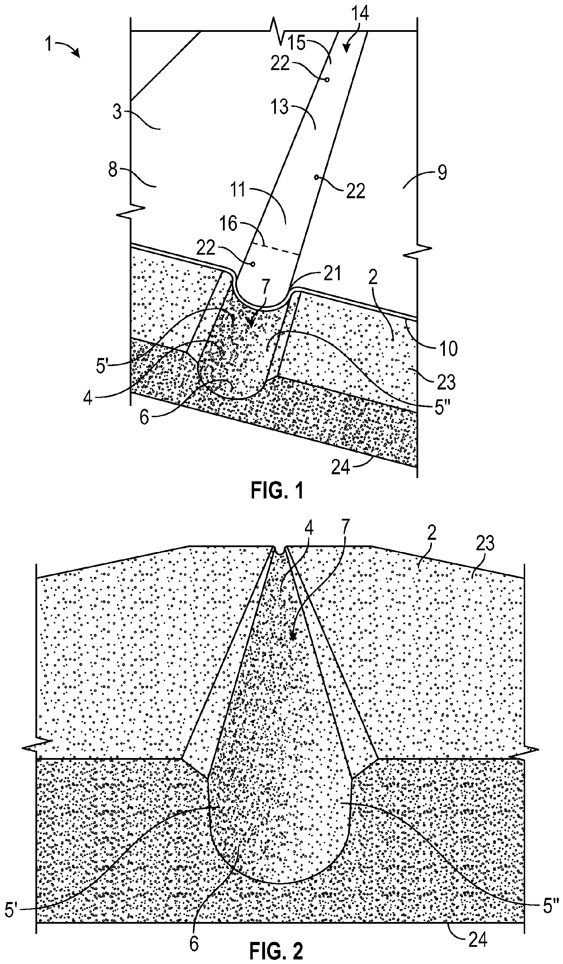

Fig. 1 shows a heat exchanger panel system 1 comprising a subfloor plate 2 and a heat spreader sheet 3 placed at the upper surface 23 of the subfloor plate 2. The subfloor plate 2 is made in a stable plate material such as wood plates, chip boards, veneer plates or other wood-based plates. It may also be formed in a hard PUR foam or EPS. The important property of the material is that it is able to support a floor or act as a floor itself, just covered by a carpet or similar, without being deformed. However, it should also possess some compression properties for receiving the heat spreader sheet 3 as explained below.

The subfloor plate 2 -see also Fig. 2 - comprises an upper surface 23 and an oppositely placed lower surface 24, both surfaces being plane and the thickness of the plate being typically around 2.2 cm. At the upper surface, a longitudinal groove 4 is provided, the longitudinal axis of the groove 4 running parallel with the longitudinal borders of the subfloor plate 2. Advantageously, this is shaped as a rectangular plate. The groove 4 is running in the entire length of the plate 2.

The groove 4 comprises a bottom part 6 and two oppositely placed wall parts, a first wall part 5' and a second wall part 5". The bottom part 6 and the two wall parts 5', 5" form a part-circular/oval recess 7 in the subfloor plate 2. The largest distance between the first 5' and the second wall 5" is around 19 mm.

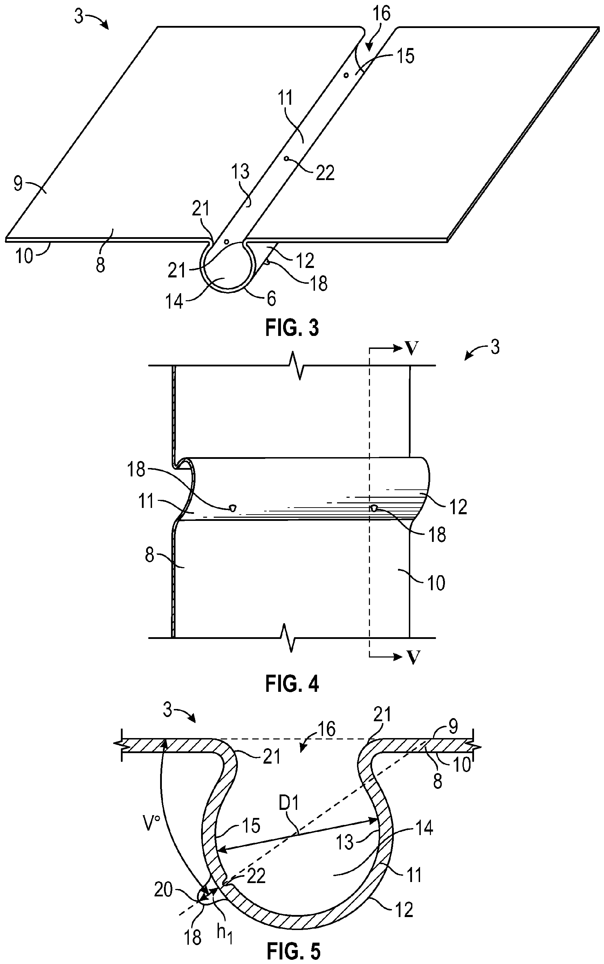

At the top of the subfloor plate 2, the heat spreader sheet 3 is arranged. The heat spreader sheet 3 - see also Fig. 3 - comprises a plate part 8 comprising an upper plane surface 9 and a lower plane surface 10. A longitudinal profile 11 is extending from the plate part 8 towards the subfloor 2, said outer profile surface 12 of the longitudinal profile 11 being substantially congruent with at least the bottom part 6 of the part-circular/oval recess 7 in the subfloor plate 2. The longitudinal profile 11 is an integrated part of the plate part 8. The thickness of the plate part 8 is around 0.5 mm. The heat spreader sheet 3 is formed from a metal plate, and the longitudinal profile 11 in said plate is typically formed by a bending tool and a punching tool for forming projections. The metal may be aluminium, copper or another suitable heat-conducting material.

The longitudinal profile 11 comprises the outer profile surface 12 and an oppositely placed inner profile surface 13. The outer profile surface 12 is almost formed congruent with the part-circular/oval recess 7 in the subfloor plate in which it is placed and fits when the system 1 is assembled.

The lower surface 10 of the heat spreader sheet 2 is placed on the upper surface 23 of the subfloor 2 when the heat exchanger system 1 is assembled. The inner profile surface 13 of the recess 14 is formed as an omega in cross section and forms a tubular inner wall 15. It has dimensions so that it is able to receive a heat tube (not shown). Advantageously, the outer diameter of a heat tube is around 16 mm, and the largest distance between the tubular inner walls 15 of the recess 14 is less than 16 mm and around 15.8 -15.9 mm, which means that a slight deformation of the heat tube takes place, said heat tube being formed in a plastic material such as polypropylene.

The tube transfers a fluid for heating or cooling the heat spreader sheet 2. By the tight relation between the tube and the recess 14 of the heat spreader sheet 2, it is ensured that a perfect heat transfer from the tube to the heat spreader sheet 2 takes place as there is an optimal contact between the two components.

The tube is pressed into the recess 14 through an aperture 16 of the recess 14, said aperture 16 being delimited by two nose-shaped protrusions 21 extending in the entire length of the longitudinal profile 11. The width of the aperture measured between the two nose-shaped protrusions is around 12-13 mm.

In the recess 14, some impressions 22 are provided by a punching tool or similar for making external projections 18. The impressions 22 are visible at the tubular inner wall 15. At the outer profile surface 12, the external projections 18 are provided placed opposite the impressions 12.

This is also shown in Fig 4. Further, Fig. 5 shows a detailed view of an external projection 18 along with its relation to the outer profile surface 12 from which it projects and is an integrated part of.

The external projections 18 are formed as bulks/hemisphere projections. The height of each projection h1 is 0.5 - 2.0 mm, advantageously 1.4 -1.8, preferably 1.5 -1.7 measured between the uppermost point 20 of the projections 18 and the surface/basis from which the projections 18 extend. The diameter of the basis of each projection 18 is around 3-5mm, and the projections are conical. The projections 18 are placed on both external sides of the longitudinal profile 11, respectively facing the first wall part 5' and the second wall part 5". The distance between the projections on each side of the profile is around 20-25 cm.

The height of a projection and the upper surface 9 of the plate part 8 provides an angle V of 2-45 degrees

The protrusions are placed at a distance from the lower surface 10 of the heat spreader sheet 3, said distance being measured as the perpendicular height from the lower surface 10 and the uppermost point of the projection 20. The distance is equal to or larger than the radius of the substantially tubular inner wall 15, ie D2.

The heat exchanger system 1 is used in the following way:

Several subfloor plates are laid down in a known manner in order to form an interconnected subfloor.

The heat exchanger sheets 3 are pressed down in the subfloor plates 2. This is done by pressing the longitudinal profile 11 provided in each heat exchanger sheet 3 down in a groove 4 of a subfloor plate 2. The external projections 18 placed at the outer profile surface 12 ensure that the heat exchanger sheet 3 is fastened to the subfloor plate 2. The projections 18 press into the walls of the recesses 4 provided in the subfloor plates 2. Thereby, it is not necessary to use nails for fastening the sheets to the subfloor as is the case in the known system. In this way, it is easy to construct the floor system and it is time-saving.

After the subfloor has been covered with the heat spreader plates, the tubes are clicked into the recesses 14 of the heat spreader sheet. The diameter of the recess 14 of the heat spreader sheet 3 is D1 (commonly 15.8 - 15.9 mm) and the diameter of the tube placed in said recess is [D1;D1*1,01] (commonly [15.8 - 16.1]). Common dimensions for the tube are 16 mm.

### List of references

- 1.: A heat exchanger panel system
- 2.: subfloor plate
- 3.: heat spreader sheet
- 4.: one longitudinal groove
- 5.: two oppositely placed wall parts ; 5' first wall part, 5" second wall part
- 6.: bottom part
- 7.: part-circular recess in said subfloor plate
- 8.: plate part
- 9.: upper surface
- 10.: lower surface
- 11.: longitudinal profile
- 12.: outer profile surface
- 13.: inner profile surface
- 14.: inner profile surface comprising a recess
- 15.: tubular inner wall
- 16.: aperture
- 17.:
- 18.: external projections
- 19.: the height of a projection being h1
- 20.: the most upper point of the projection
- 21.: nose shaped protrusions
- 22.: Impressions
- 23.: upper surface subfloor
- 24.: lower surface subfloor

## Claims

1. A heat exchanger panel system (1) comprising a subfloor plate (2) and a heat spreader sheet (3), said subfloor plate (2) comprising at least one longitudinal groove (4), said groove (4) comprising a bottom part (6) and two oppositely placed wall parts (5',5"), said wall parts (5',5") and bottom part (6) forming a part-circular recess (7) in said subfloor plate (2) and the heat spreader sheet (3) comprising a plate part (8) having an upper surface (9) and a lower surface (10), said plate part (8) comprising a longitudinal profile (11) extending from the lower surface (10) towards the subfloor plate (2), the longitudinal profile comprising an outer profile surface (12) and an oppositely placed inner profile surface (13), said outer profile surface (12) being substantially congruent with at least the bottom part (6) of the part-circular recess (7), said inner profile surface (13) forming a recess (14) provided with a substantially tubular inner wall (15) and having an aperture (16) for receiving a tube, **characterised in that** the outer profile surface (12) of the profile (11) comprises external projections (18) placed at opposite sides of the longitudinal profile (11).

2. A heat exchanger panel system according to claim 1, **characterised in that** the height of a projection (18) and the upper surface (9) of the heat spreader sheet (3) provide an angle V of 2-45 degrees.

3. A heat exchanger panel system according to claims 1-2, **characterised in that** the external projections (18) are placed at a certain distance from the lower surface (10) of the heat spreader sheet (3), said distance being equal to or larger than the radius of the substantially tubular inner wall (15), said distance measured between the uppermost point (20) of the external projection (18) and perpendicular to the lower surface (10).

4. A heat exchanger panel system according to claims 1-3, **characterised in that** the internal diameter of the recess (14) of the heat spreader sheet (3) is D1, and the distance between the sides delimiting the aperture (16) is less than the diameter D1 of the recess (14) of the heat spreader sheet (3).

5. A heat exchanger panel system according to claims 1-4, **characterised in that** the longitudinal sides delimiting the aperture (16) of the recess (14) comprise nose-shaped protrusions (21).

6. A heat exchanger panel system according to claims 1, **characterised in that** the heat spreader sheet (3) is formed from a metal plate.

## Patentansprüche

1. Ein Wärmetauschertafelsystem (1), umfassend eine Unterbodenplatte (2) und ein Wärmespreizerblatt (3), wobei jene Unterbodenplatte (2) mindestens eine longitudinale Furche (4) umfasst, wobei jene Furche (4) einen Bodenteil (6) und zwei gegenüber platzierte Wandteile (5', 5") umfasst, wobei jene Wandteile (5', 5") und jener Bodenteil (6) eine kreissegmentförmige Aussparung (7) in jener Unterbodenplatte (2) bilden und das Wärmespreizerblatt (3) einen Plattenteil (8) mit einer oberen Oberfläche (9) und einer unteren Oberfläche (10) umfasst, wobei jener Plattenteil (8) ein longitudinales Profil (11) umfasst, das sich von der unteren Oberfläche (10) in Richtung der Unterbodenplatte (2) erstreckt, wobei das longitudinale Profil eine äußere Profil-Oberfläche (12) und eine gegenüber platzierte innere Profil-Oberfläche (13) umfasst, wobei jene äußere Profil-Oberfläche (12) im Wesentlichen kongruent mit mindestens dem Bodenteil (6) der kreissegmentförmigen Aussparung (7) ist, wobei jene innere Profil-Oberfläche (13) eine Aussparung (14) bildet, die mit einer im Wesentlichen tubulären inneren Wand (15) ausgestattet ist und eine Öffnung (16) zum Aufnehmen einer Röhre hat, **dadurch charakterisiert, dass** die äußere Profil-Oberfläche (12) des Profils (11) außenliegende Vorsprünge (18) umfasst, die an gegenüberliegenden Seiten des longitudinalen Profils (11) platziert sind.

2. Ein Wärmetauschertafelsystem gemäß Anspruch 1, **dadurch charakterisiert, dass** die Höhe eines Vorsprungs (18) und der oberen Oberfläche (9) des Wärmespreizerblatts (3) einen Winkel V von 2-45 Grad bilden.

3. Ein Wärmetauschertafelsystem gemäß den Ansprüchen 1-2, **dadurch charakterisiert, dass** die außenliegenden Vorsprünge (18) in einer bestimmten Distanz von der unteren Oberfläche (10) des Wärmespreizerblatts (3) platziert sind, wobei jene Distanz gleich oder größer als der Radius der im Wesentlichen tubulären inneren Wand (15) ist, wobei jene Distanz zwischen dem obersten Punkt (20) und dem außenliegenden Vorsprung (18) und senkrecht zur unteren Oberfläche (10) gemessen wird.

4. Ein Wärmetauschertafelsystem gemäß den Ansprüchen 1-3, **dadurch charakterisiert, dass** der innere Durchmesser der Aussparung (14) des Wärmespreizerblatts (3) D1 ist und dass die Distanz zwischen den Seiten, die die Öffnung (16) begrenzen, kleiner als der Durchmesser D1 der Aussparung (14) des Wärmespreizerblatts (3) ist.

5. Ein Wärmetauschertafelsystem gemäß den Ansprüchen 1-4, **dadurch charakterisiert, dass** die longitudinalen Seiten, die die Öffnung (16) der Aussparung (14) begrenzen, nasenförmige Ausbuchtungen (21) umfassen.

6. Ein Wärmetauschertafelsystem gemäß Anspruch 1, **dadurch charakterisiert, dass** das Wärmespreizerblatt (3) aus einer Metallplatte gebildet wird.

## Revendications

1. Système de panneau échangeur de chaleur (1) comprenant une plaque de sous-plancher (2) et une feuille de dissipation thermique (3), ladite plaque de sous-plancher (2) comprenant au moins une gorge longitudinale (4), ladite gorge (4) comprenant une partie de fond (6) et deux parties de paroi (5', 5") positionnées en vis-à-vis, lesdites parties de paroi (5', 5") et la partie de fond (6) formant un évidement partiellement circulaire (7) dans ladite plaque de sous-plancher (2), et la feuille de dissipation thermique (3) comprenant une partie de plaque (8) ayant une surface supérieure (9) et une surface inférieure (10), ladite partie de plaque (8) comprenant un profil longitudinal (11) s'étendant depuis la surface inférieure (10) vers la plaque de sous-plancher (2), le profil longitudinal comprenant une surface de profil extérieure (12) et une surface de profil intérieure (13) positionnée en vis-à-vis, ladite surface de profil extérieure (12) correspondant sensiblement au moins à la partie de fond (6) de l'évidement partiellement circulaire (7), ladite surface de profil intérieure (13) formant un évidement (14) muni d'une paroi intérieure sensiblement tubulaire (15) et ayant une ouverture (16) pour recevoir un tube, **caractérisé en ce que** la surface de profil extérieure (12) du profil (11) comprend des saillies externes (18) placées sur des côtés opposés du profil longitudinal (11).

2. Système de panneau échangeur de chaleur selon la revendication 1, **caractérisé en ce que** la hauteur d'une saillie (18) et la surface supérieure (9) de la feuille de dissipation thermique (3) forment un angle V de 2 à 45 degrés.

3. Système de panneau échangeur de chaleur selon les revendications 1 et 2, **caractérisé en ce que** les saillies externes (18) sont placées à une certaine distance de la surface inférieure (10) de la feuille de dissipation thermique (3), ladite distance étant égale ou supérieure au rayon de la paroi intérieure sensiblement tubulaire (15), ladite distance étant mesurée entre le point le plus haut (20) de la saillie externe (18) et perpendiculairement à la surface inférieure (10).

4. Système de panneau échangeur de chaleur selon les revendications 1 à 3, **caractérisé en ce que** le diamètre interne de l'évidement (14) de la feuille de dissipation thermique (3) est D1, et la distance entre les côtés délimitant l'ouverture (16) est inférieure au diamètre D1 de l'évidement (14) de la feuille de dissipation thermique (3).

5. Système de panneau échangeur de chaleur selon les revendications 1 à 4, **caractérisé en ce que** les côtés longitudinaux délimitant l'ouverture (16) de l'évidement (14) comprennent des saillies en forme de nez (21).

6. Système de panneau échangeur de chaleur selon la revendication 1, **caractérisé en ce que** la feuille de dissipation thermique (3) est formée à partir d'une plaque métallique.
